# EUROPEAN PATENT SPECIFICATION

(11) **EP 4 712 535 B1**
(45) Date of publication and mention of the grant of the patent: **29.07.2026**
(21) Application number: 24200367.1
(22) Date of filing: 13.09.2024
(51) Int. Cl.: H04W 16/00, H04W 16/14, H04W 24/02, H04W 48/18, H04L 41/0895, H04L 41/40

(54) **METHOD, COMPUTER PROGRAM, AND APPARATUS FOR ALLOCATING RADIO RESOURCES IN A TRACKING AREA OF A MOBILE COMMUNICATION SYSTEM**
VERFAHREN, COMPUTERPROGRAMM UND VORRICHTUNG ZUR ZUWEISUNG VON FUNKRESSOURCEN IN EINEM VERFOLGUNGSBEREICH EINES MOBILEN KOMMUNIKATIONSSYSTEMS
PROCÉDÉ, PROGRAMME INFORMATIQUE ET APPAREIL D'ATTRIBUTION DE RESSOURCES RADIO DANS UNE ZONE DE SUIVI D'UN SYSTÈME DE COMMUNICATION MOBILE

(43) Date of publication of application: 18.03.2026
(73) Proprietor: Deutsche Telekom AG, 53113 Bonn (DE)
(72) Inventor: XU, Bangnan, 64291 Darmstadt (DE)
(74) Representative: 2SPL Patentanwälte PartG mbB

(56) References cited:
- WO-A1-2018/153432
- US-A1- 2022 217 620
- US-A1- 2023 156 583
- US-A1- 2023 239 727
- "3rd Generation Partnership Project; Technical Specification Group Services and System Aspects; System architecture for the 5G System (5GS); Stage 2 (Release 18)", 13 June 2024 (2024-06-13), XP052645436, Retrieved from the Internet <URL:https://ftp.3gpp.org/tsg_sa/WG2_Arch/Latest_SA2_Specs/DRAFT_INTERIM/23501-i60_CRs_Implemented.zip 23501-i60_CRs_Implemented.docx> [retrieved on 20240613]

## Description

### Field

Examples relate to a method, a computer program, and an apparatus for allocating radio resources in a tracking area of a mobile communication system, more particularly, to a concept for enabling cell specific radio resource allocation for network slices in a tracking area of a mobile communication system.

### Background

Mobile communication systems have evolved over the last decades and high-quality wireless services have become available. Emerging 5G (5th Generation mobile network) services, e.g. live video productions, have very challenging requirements on throughput and/or latency. Network slicing is a technology that allows multiple virtual networks to be created on top of a shared physical infrastructure, providing tailored services for different use cases within a single network architecture. It is a key component of 5^{th} generation (5G) networks, enabling service providers to customize the network for various applications with distinct requirements, such as latency, bandwidth, or security. Each network slice can be configured independently to meet the specific needs of applications like autonomous driving, Internet of Things (IoT), or enhanced mobile broadband, ensuring optimal performance. This flexibility enhances the efficiency of resource utilization, improves user experiences, and supports the diverse demands of modern digital services. By enabling end-to-end isolation between slices, network slicing also boosts security and quality of service (QoS), making it an essential part of future telecommunications systems.

Network slicing enables to build network in network scenarios and to allocate network resources to specific service types, e. g. eMBB (enhanced Mobile BroadBand), mIoT (massive Internet of Things) or URLLC (Ultra-Reliable Low-Latency Communication) as specified in 3GPP (3^{rd} Generation Partnership Project). In addition, network slicing enables new services, like live video production, by allocating radio resources, e. g. up to 50% of total radio resources in radio cells, to a network slice that is created for live video production.

Documents US 2022/0217620 A1 and WO 2018/153432 A1 relate to network slicing in mobile communication systems 3GPP document "Technical Specification Group Services and System Aspects; System architecture for the 5G System (5GS); Stage 2 (Release 18)" and US 2023/156583 A1 relate to cell-specific configuration of network slices.

### Summary

It is a finding of the present disclosure that current radio resource allocation to network slices is not scalable and cannot support mass market introduction of new services supported by network slicing like live video production. The reason is that a network slice is configured for a whole tracking area (TA) of a radio network. To avoid signaling overhead and complex mobility management, a TA consists of many radio cells. Normally there are only several tracking areas in a big city. That means if a large amount of radio resources is allocated to a network slice, e. g. 50% of radio resources allocated to a network slice for live video production, all radio cells in the same TA are configured with the same radio resource allocation. However, live video production will be done only at a specific radio cell in a certain time duration, the radio resource allocation in all other radio cells in the same TA is unnecessary and blocks creation of additional network slices.

Another issue of current radio resource allocation to network slices is that a UE that is allowed to access a network slice can access this network slice via any radio cell in the tracking area. For services, like live video production, however, a UE should be limited to access the network slice only via a specific radio cell. The invention is as defined by the claims.

Examples of the present disclosure may solve the issues via passive radio resource allocation for a network slice in a TA and activation of passive radio resource allocation for the network slice in a radio cell if required. The radio resource allocation becomes active in a radio cell only if a UE is admitted to the network slice via this radio cell. Examples provide a method and a system of radio resource allocation for network slices in mobile networks.

Examples provide a method for allocating radio resources in a tracking area of a mobile communication system. The tracking area comprising a plurality of radio cells and two or more network slices are configured in the tracking area. The method comprises passively allocating radio resources for two or more network slices in each cell of the tracking area. The passively allocated radio resources are inactive for radio communication of the assigned/corresponding network slices. The method further comprises actively allocating the passively allocated radio resources in a cell of the tracking area for one of the network slices by admission of a user equipment, UE, to the network slice, via the cell, to use the actively allocated radio resources in said cell. At least a part of the actively allocated radio resources for the network slice is used for radio communication with the UE in the cell. By allocating the radio resource passively first, an overallocation can be allowed in the TA as long as the active allocation undergoes required limitations.

The passively allocating comprises passively allocating radio resources for the two or more network slices in the tracking area and the actively allocating comprises actively allocating the passively allocated radio resources of the two or more network slices in different cells of the tracking area. Thereby, different cells of the TA may allocate radio resources actively to network slices differently. An amount of passively allocated radio resources in the TA may be higher than an amount of actively allocated radio resources in the tracking area. The actively allocating of radio resources may comprise actively allocating passively allocated radio resources of different network slices in different cells of the tracking area independently. Active allocation of radio resources for network slices may be on a cell basis throughout the tracking area. By admitting a certain UE to a network slice the respective resources for the network slice become actively allocated.

In further examples the method may further comprise booking radio resources prior to actively allocating passively allocated radio resources. Hence, users may book or reserve required radio resource in advance so they can be made available when needed and are not blocked by others. The booking may comprise receiving a radio resource request for a certain time from the UE or from a booking portal in a certain location in advance and reserving the radio resources for the certain time and the certain location. That way it can be avoided that services of a certain network slice are not available when needed. In further examples, the method may comprise blocking admission to another network slice in the radio cell if actively allocating the passively allocated radio resources for the (other) network slice would disable actively allocating booked radio resources. For example, the method further comprises identifying the booking by a Single - Network Slice Selection Assistance Information, S-NSSAI, or a Subscription Permanent Identifier, SUPI. Examples may enable efficient network slice reservation and booking identification.

For example, an amount of actively allocated radio resources in the radio cell for the two or more network slices may be limited by a predefined limit. Such a limit may be configured by an operator of a mobile communication system, e.g. a certain percentage of the available resources may constitute a limit for network slice allocation. The method may further comprise controlling the predefined limit using network slice admission control and blocking admission to a further network slice in the radio cell if actively allocating the passively allocated radio resources for the further network slice exceeds the predefined limit. That way examples may make sure that active radio resources allocated to network slices do not exceed the predefined limit. Furthermore, the method may comprise controlling admission to a network slice based on a predefined algorithm to enable systematic admission. The predefined algorithm may be a first-come-first-serve algorithm or an algorithm that may be based on priorities. The method may further comprise controlling a number or UEs accessing a network slice in the radio cell of the tracking area. That way overload or congestion may be reduced or even avoided.

Another example is a computer program having a program code for performing one of the methods described herein, when the computer program is executed on a computer, a processor, or a programmable hardware component.

An apparatus for a mobile communication system is another example. The apparatus comprises one or more interfaces configured to communicate in the mobile communication system and one or more processing devices configured to perform one of the methods described herein. Examples further provide a mobile communication system comprising an example of the apparatus. A further example is a network component, such as a server, an access node or a core network node, which comprises the apparatus.

### Brief description of the Figures

Some examples of apparatuses, methods, and/or computer programs will be described in the following by way of example only, and with reference to the accompanying figures, in which
Fig. 1 shows a flowchart of an example of a method for allocating radio resources in a tracking area of a mobile communication system;
Fig. 2 shows a block diagram of an example of an apparatus for allocating radio resources in a tracking area of a mobile communication system;
Fig. 3 illustrates a tracking area with n cells in an example;
Fig. 4 shows an example of three network slices configured with Passive radio Resource Allocation (PRA); and
Fig. 5 depicts an example of a system of Active radio Resource allocation (ARA) to network slices.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

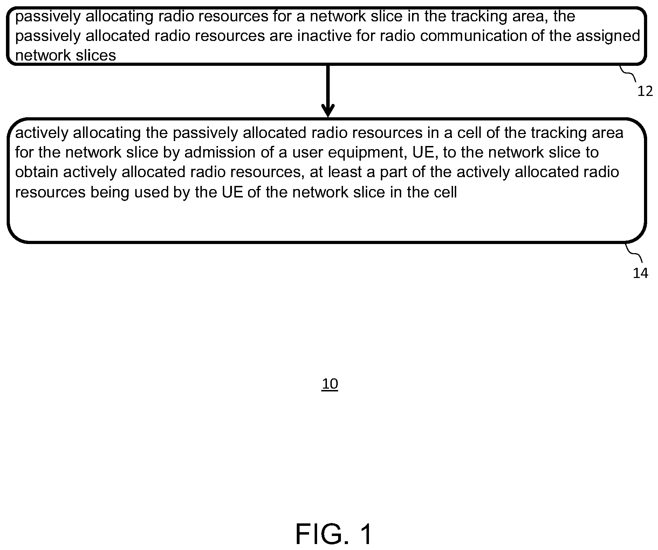

Fig. 1 shows a flowchart of an example of a method 10 for allocating radio resources in a tracking area of a mobile communication system. The tracking area comprises a plurality of radio cells and two or more network slices are configured in the tracking area.

A tracking area in mobile communication refers to a specific geographical region within a mobile network that consists of one or more cells where a mobile device is registered and monitored for its location. It is used by the network to manage the mobility of user devices, ensuring efficient resource allocation and communication between the device and the network infrastructure. When a device moves within the same tracking area, no location updates are required, reducing signaling overhead. However, when it crosses into a new tracking area, a location update is triggered, informing the network of the device's new position. Tracking areas are crucial for managing user mobility in cellular networks, optimizing handovers, and ensuring continuous service without interruptions, especially as users move across different network regions.

Paging in a tracking area refers to a process in mobile networks, particularly in LTE (Long-Term Evolution) and 5G systems, used to notify a UE about an incoming service when its location is not exactly known. When a UE is in idle mode (not actively transmitting or receiving data), it regularly informs the network of its general location by sending Tracking Area Updates (TAUs). A "Tracking Area" consists of multiple cells, and the UE registers itself in a set of Tracking Areas called a "Tracking Area List." When there is incoming data for the UE (like an incoming call, short message, or push notification) but the UE is in idle mode, the network needs to notify it. Since the UE's exact cell location is unknown, the network triggers a paging process over the entire tracking area where the UE last registered. The network (through the eNodeB in LTE or gNodeB in 5G) sends a Paging Message to all cells within the Tracking Area. This message contains the temporary identifier of the UE, alerting the UE that there is data waiting for it. The network pages the UE at specific intervals, determined by the Paging Cycle, to save battery life on the UE and reduce unnecessary signaling. The paging occurs in predefined frames, and the UE wakes up only during its assigned paging occasion to check for the paging message. If the UE detects its identifier in the paging message, it responds to the network via the Random Access Procedure. This moves the UE from idle to connected mode, allowing it to receive the incoming service (e.g., a phone call). To optimize resource use, the network sends paging messages only to the Tracking Areas where the UE is likely located, based on its last update, rather than paging every cell in the entire network. Overall, paging within a tracking area is a key feature of mobile networks that balances efficient communication with battery savings on mobile devices.

As shown in Fig. 1 the method 10 comprises passively allocating 12 radio resources for a network slice in the tracking area.

A network slice in mobile communication is a virtualized, end-to-end portion of a network that is tailored to meet specific service requirements. It allows operators to create multiple isolated, independent virtual networks on top of a shared physical infrastructure. Each slice can be customized with different configurations for performance characteristics such as bandwidth, latency, security, and reliability, based on the needs of particular use cases like eMBB, mIoT, or URLLC. This flexibility enables operators to efficiently manage network resources, providing distinct service levels to different applications while ensuring isolation between slices to maintain performance and security. Network slicing is a key enabler of 5G networks, helping support diverse use cases and industries on a single network architecture.

In general, allocating radio resources refers to the process in wireless communication networks where the available spectrum (or radio frequency) and related network resources (like time slots, transmission power, and antenna configurations) are assigned to different users or devices to facilitate efficient data transmission. In simpler terms, it is how a mobile network ensures that users can transmit and receive data while avoiding interference and optimizing performance. The passively allocated radio resources are inactive/not used by the assigned network slice for radio communication. Examples of the present disclosure first passively allocate radio resources. This means, that the radio resources are assigned to the network slices in the tracking area for potential use, but they are not yet used by them for radio communication. Therefore, the passively allocated radio resources do not yet contribute to the load by the assigned network slices in the system. Passively allocated radio resources can be used by UEs of other slices. As further shown in Fig. 1 the method 10 further comprises actively allocating 14 the passively allocated radio resources in a cell of the tracking area for the network slice by admission of a UE to the network slice to obtain actively allocated radio resources. Hence, it is a concept of examples to first passively allocate the radio resources and then subsequently actively allocate or activate the passively allocated radio resources to the assigned network slices. At least a part of the actively allocated radio resources is then used by the UE of the network slice in the cell. For example, 30% of the available radio resources of the cell in the tracking area are passively allocated for a network slice, e.g. a network slice for a live video production service. If a UE requests such service, the passively allocate radio resource are then actively allocated in the cell. The UE can then use all or only a part of the actively allocated resources in that cell, while in other cells, where the radio resources for the same network slice remain passively allocated.

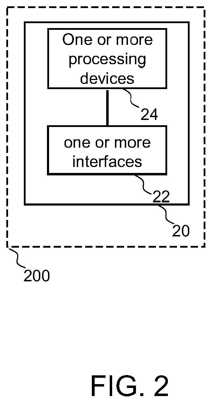

Fig. 2 shows a block diagram of an example of an apparatus 20 for allocating radio resources in a tracking area of a mobile communication system. The apparatus 20 for the mobile communication system comprises one or more interfaces 22, which are configured to communicate in the mobile communication system, and which are coupled to one or more processing devices 24. The one or more processing devices 24 are configured to perform one of the methods described herein. Fig. 2 also illustrates an example of a network entity 200 comprising an example of the apparatus 20. The example of the network component/entity 200 is shown in dotted lines as it is optional from the perspective of the apparatus 20. Yet another example is a mobile communication system with an example of the network component 200.

As illustrated in Fig. 2, the respective one or more processing devices 24 are coupled to the one or more interfaces 22. The one or more interfaces 22 may correspond to one or more inputs and/or outputs for receiving and/or transmitting information, which may be in digital (bit) values according to a specified code or protocol, within a module, between modules or between modules of different entities. For example, an interface 22 may comprise interface circuitry configured to receive and/or transmit information. In examples an interface 22 may correspond to any means for obtaining, receiving, transmitting or providing analog or digital signals or information, e.g., any connector, contact, pin, register, input port, output port, conductor, lane, etc., which allows providing or obtaining a signal or information. An interface 22 may be configured to communicate (transmit, receive, or both) in a wireless or wireline manner and it may be configured to communicate, i.e., transmit and/or receive signals, information with further internal or external components. The one or more interfaces 22 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 24 may be implemented using one or more processing units, one or more circuitries, any means for processing, such as a processor, a computer or a programmable hardware component being operable with accordingly adapted software. In other words, the described function of the one or more processing devices 24 may as well be implemented in software, which is then executed on one or more programmable hardware components. Such hardware components may comprise a general-purpose processor, a Digital Signal Processor (DSP), a micro-controller, etc.

A network entity or component can be located in the fixed or stationary part of the network or system. A network entity may correspond to a remote radio head, a transmission point, an access point, a macro cell, a small cell, a micro cell, a pico cell, a femto cell, a metro cell etc. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity may correspond to a NodeB, an eNodeB, an ngNB, a BTS (Base Transceiver Station), an access point, etc. The network entity may as well be a node the core network of the mobile communication system.

The mobile communication system may be cellular. The term cell refers to a coverage area of radio services provided by a transmission point, a remote unit, a remote head, a remote radio head, communication device, network entity or a NodeB, an eNodeB, an ngNB, respectively. It should be noted that a base station or any of the listed entities may provide multiple cells. However, since a cell is provided by a base station, the terms cell and base station may be used synonymously in this description, even if a base station provides multiple cells. A wireless communication device, e.g., the communication device, can be registered or associated with at least one cell (e.g., the network entity), e.g., it can be associated to a cell such that data can be exchanged between the network and the mobile in the coverage area of the associated cell using a dedicated channel, connection or link.

In general, the communication device is a device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a smartwatch, a laptop computer, a tablet computer, or autonomous augmented-reality glasses. For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the communication device and the network entity may be configured to communicate in a mobile communication system/cellular mobile communication system.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6^{th} Generation system (6G), a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

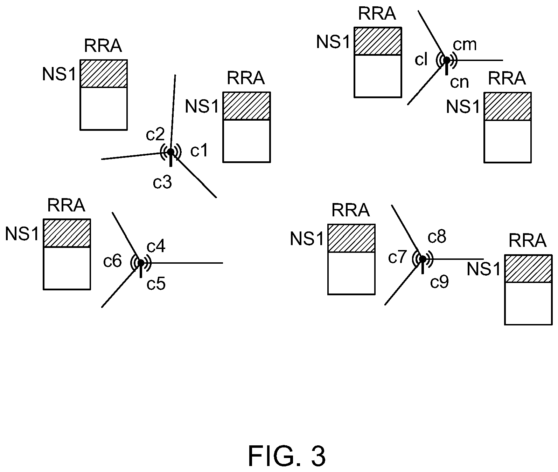

Fig. 3 illustrates a tracking area with n cells in an example. In this example at each site three cells are provided, e.g. at the site on the top left cells c1, c2, and c3. On top right the cells are cl, cm, and cn. N is the number of cells in the tracking area. A typical number of radio cells in a tracking area can vary depending on the network design, geographic region, and specific requirements of the mobile operator. However, a common configuration might include anywhere from 10 to 100 radio cells within a single tracking area. In densely populated urban areas, tracking areas might have fewer cells due to high user density and the need for more precise location tracking. Conversely, in rural or less populated areas, a tracking area may cover a larger geographic region with more radio cells to maintain coverage over a wider area. Mobile operators adjust the size and number of radio cells in tracking areas to balance signaling efficiency and location management.

Fig. 3 shows a tracking area consisting of n radio cells with radio resource allocation (RRA) for network slice NS1.

Radio resources in mobile communication refer to the finite spectrum of electromagnetic frequencies allocated for wireless communication and the associated transmission capabilities used to carry data and voice over the air. These resources may include time, frequency, spatial, code and/or power resources, which are managed and shared among users and services to ensure efficient use of the network. In cellular systems, radio resources may be divided into channels or resources blocks and managed through techniques like frequency division, time division, and code division to prevent interference and maximize capacity. Effective allocation and optimization of radio resources are critical for maintaining network performance, providing consistent coverage, and supporting the increasing demand for data in modern mobile communication systems. The efficient use of these resources helps in improving network throughput, reducing latency, and ensuring high-quality service for users. For example, it can be assumed that radio resources correspond to a grid of sub carriers and time resources in a OFDM grid, which can then be assigned or allocated.

In the TA shown in Fig. 3, three network slices NS 1, NS2 and NS3 should be configured. It is assumed that NS1 requires 40% of radio resource of radio cells, and NS2 and NS3 require 20% and 30% respectively. It is further assumed that a maximum amount of radio resources that can be assigned to network slices is limited to 50% as the remaining 50% must be reserved for eMBB services. Hence an amount of actively allocated radio resources in the radio cell for the two or more network slices is limited by a predefined limit. In this example the predefined limit is 50%.

Conventionally, as soon as NS 1 is configured in this TA, NS2 and NS3 cannot be configured any more in this TA as otherwise the total amount of radio resource allocation to network slices exceeds 50%. Therefore, the conventional radio resource allocation for network slicing is not scalable and cannot support mass market introduction of network slicing based services like live video production. This is shown in Fig. 3 by NS1 being actively configured with 40% of the available resources thereby blocking active configuration of the other two network slices, as the predefined limit would be exceeded.

Examples of the above method 10 enable configuring NS1, NS2 and NS3 in the TA at the same time by passive radio resource allocation in a TA and active radio resource allocation in a radio cell. It ensures that the total amount of radio resource actively allocated to network slices in a radio cell will not exceed the predefined limit 50%.

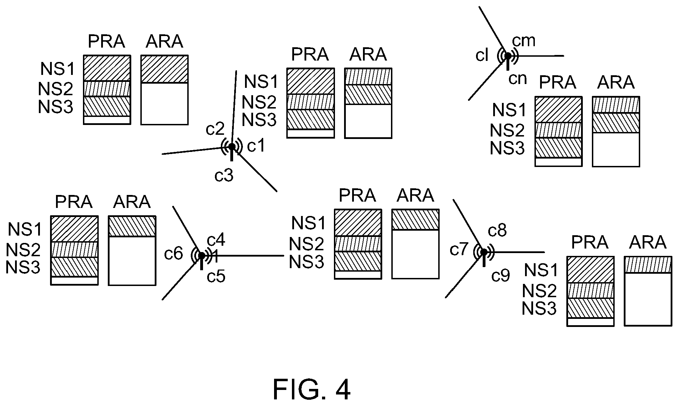

Fig. 4 shows an example of three network slices configured with passive radio resource allocation (PRA). Fig. 4 shows the same site and cell scenario as Fig. 3. In each cell there is set of PRA (passively allocated radio resources) and ARA (actively allocated radio resources). As shown in Fig. 4 the passively allocating 12 comprises passively allocating radio resources for the two or more network slices NS1, NS2, and NS3, in the tracking area. The actively allocating 14 comprises actively allocating the passively allocated radio resources of the two or more network slices NS 1, NS2, and NS3 in different cells of the tracking area. For example, in cell c9 the radio resources for network slice 2 are actively allocated and in cell c2 the radio resources for network slice NS1 are actively allocated. As further shown in Fig. 4, an amount of passively allocated radio resources in the tracking area is higher than an amount of actively allocated radio resources in the tracking area. This is, because the predefined limit applies to the actively allocated radio resources and over-allocation is allowed for the passively allocated radio resources. Furthermore, the actively allocating 14 of radio resources comprises actively allocating passively allocated radio resources of different network slices in different cells of the tracking area independently. Therefore, radio resource management for configured network slices can be taken on a cell level.

Fig. 4 shows passive radio resource allocation (PRA) and active radio resource assignment (ARA) in each radio cell. As all three network slices are configured in this TA, the total allocation of passive radio resources to the three network slices is 90%, exceeding the predefined limit 50%. However, Fig. 2 shows that the active allocation of radio resources never exceeds 50% in a radio cell. This is achieved by the method 10.

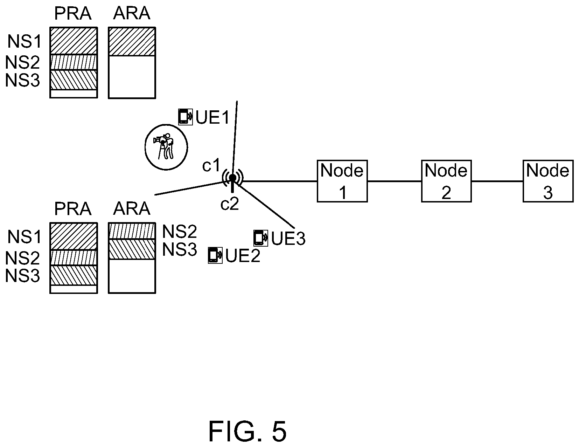

Fig. 5 depicts an example of a system of active radio resource allocation (ARA) to network slices. In Fig. 5 a network site is depicted, which provides the two radio cells c1 and c2. Both radio cells belong to the same tracking area and radio resources for three network slices NS1, NS2, and NS3 are passively allocated. It is further assumed that UE1 wants to access NS1. UE2 and UE3 access NS2 and NS3, respectively. Node 1 is an access node, e.g. a gNodeB in 5G NR as described in 3GPP TS (Technical Specification) 38.300 V18.2.0 (2024-06), 3rd Generation Partnership Project; Technical Specification Group Radio Access Network, NR; NR and NG-RAN Overall Description; Stage 2 (Release 18). Node 2 is an access management node, e. g. AMF in 5G Core as described in 3GPP TS 29.518 V18.6.0 (2024-06), 3rd Generation Partnership Project; Technical Specification Group Core Network and Terminals; 5G System; Access and Mobility Management Services; Stage 3 (Release 18). Node 3 is a resource management node, e. g. Network Slice Admission Control Service (NSACS) in 5G as described in 3GPP TS 29.536 V18.6.0 (2024-06), 3rd Generation Partnership Project; Technical Specification Group Core Network and Terminals; 5G System; Network Slice Admission Control Services; Stage 3 (Release 18), with additional radio resource management function, e.g. a bookkeeper as described in patent application EP 4216504 A1.

The method 10 may further comprise booking radio resources prior to actively allocating passively allocated radio resources. Hence, a booking mechanism may be in place indicating that certain radio resources for a certain network slice are needed by a user or for a service. For example, the booking comprises receiving a radio resource request for a certain time and in a certain location in advance and reserving the radio resources for the certain time and the certain location. A radio resource request for a booking may be received from a booking portal. That way, a network node or component may maintain a schedule for booked radio resources. For example, a network slice for a live video production service to transfer high quality video data may be booked for a certain time (time of a soccer game) and a certain location (soccer stadium). The method 10 may then further comprise blocking admission to another network slice in the radio cell if actively allocating the passively allocated radio resources for the further network slice would disable actively allocating booked radio resources. Hence, during the soccer game, access (activation of passively allocate radio resources) to other network slices may be blocked if the total resources for the network slice transferring the soccer game and the further network slice would exceed the predefined limit.

In general, the method 10 may further comprise controlling the predefined limit using network slice admission control and blocking admission to a further network slice in the radio cell if actively allocating the passively allocated radio resources for the further network slice would exceed the predefined limit. The method 10 may further comprise controlling admission to a network slice based on a predefined algorithm.

Various algorithms can be implemented for the active allocation of radio resources to network slices in a radio cell. For example, active allocation can be based on a First-Come-First-Serve algorithm. Another algorithm may consider priorities, e.g. network slice priorities or user priorities. In this case, if UE1 is the first one sending registration request as described in 3GPP TS 24.501 (V18.7.0 (2024-06), 3rd Generation Partnership Project; Technical Specification Group Core Network and Terminals; Non-Access-Stratum (NAS) protocol for 5G System (5GS); Stage 3; (Release 18)) for accessing NS1 via cell c1 to node 1 that forwards registration request to node 2 with a UE initial message as described in 3GPP TS 38.413 V18.2.0 (2024-06), 3rd Generation Partnership Project; Technical Specification Group Radio Access Network; NG-RAN; NG Application Protocol (NGAP) (Release 18).

Node 2 requests node 3 to check if the registration request can be accepted. If the registration request of UE1 is accepted, then any registration request of UE2 and UE3 to access NS2 and NS3 via cell c1 will not be accepted by Node 3 as otherwise the active allocation of radio resources in cell c1 exceeds 50%. By doing so, the active allocation of radio resources in a radio cell will not exceed the predefined value 50%. Of course, UE2 and UE3 can access to NS2 and NS3 via cell c2 as the total amount of active allocation of radio resources in cell c2 does not exceed the predefined value 50%.

The active allocation of radio resource to network slices in a cell can be based on booking. In this case, a registration request for accessing a network slice via a radio cell will be accepted only if a UE booked to access the slice via this radio cell for a specific time duration in advance. This booking method is very useful for services like live video production. For example, if UE1 is a live video production (LVP) terminal and has a live video production in a specific time duration at a specific location via cell c1, it can book this LVP via a bookkeeper in advance. During the event time, UE1 can send a registration request for accessing NS 1 via cell c1 to node 1 that forwards to node 2 via UE initial message. Node 2 requests Node 3 to check if a corresponding booking is available, for example, via invoking an API (Application Programming Interface) provided by a bookkeeper. The method 10 may then comprise identifying the booking by a Single - Network Slice Selection Assistance Information, S-NSSAI, or a Subscription Permanent Identifier, SUPI. The booking can be identified by S-NSSAI or SUPI. The registration request for accessing the network slice will be accepted only if a booking to access the network slice via cell c1 for this time duration is available. Therefore, it is ensured that active allocation of radio resources in a radio cell will not exceed the predefined value.

If more than one UE can access to a network slice, the number of UEs accessing via a radio cell can be limited by the node 3 as well. This is different from the NSACS specification in 3GPP TS 29.536 (as cited above) that limits the number of UEs accessing a network slice in a TA. The limitation of number of UEs accessing a network slice in a TA cannot prevent overloading in a radio cell. It is a finding of the present disclosure that the number of UEs accessing to a network slice via a radio cell can be limited by node 3 so that overloading in any radio cell is prevented. Hence, the method 10 may further comprise controlling a number or UEs accessing a network slice in the radio cell of the tracking area.

The cell id (identification) of the radio cell via that a UE sends registration request is included in the UE initial message sent from node 1 to node 2 as an Information Element (IE) user location information as described in 3GPP TS 38.413.

### Summarizing further examples:

Examples may provide a method for radio resource allocation for network slices that consists of passive radio resource allocation for network slices in a TA and active radio resource allocation for network slices in a radio cell, where active radio resource allocation is achieved by an admission control of access to network slices via a radio cell.

The sum of passive radio resource allocation to network slices in a TA may be unlimited.

The sum of active radio resource allocation in a radio cell for network slices may be ensured not to exceed a predefined limit by network slice admission control and radio resource management.

The network slice admission control of access to a network slice via a radio cell is based on a predefined algorithm, e. g. first come first serve.

The network slice admission control of access to a slice via a radio cell may be based on booking, e.g. via a bookkeeper.

The booking may be identified by S-NSSAI and/or SUPI.

The number of UEs accessing to a network slice via a radio cell is managed by the network slice admission control.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for allocating radio resources in a tracking area of a mobile communication system, the tracking area comprising a plurality of radio cells and two or more network slices are configured in the tracking area, the method (10) comprising:
passively allocating (12) radio resources for two or more network slices in each cell of the tracking area, the passively allocated radio resources are inactive for radio communication of the corresponding network slices; and
actively allocating (14) the passively allocated radio resources in a cell of the tracking area for one of the network slices by admission of a user equipment, UE, to the network slice, via the cell, to use actively allocated radio resources in said cell, at least a part of the actively allocated radio resources being used for radio communication with the UE of the network slice in the cell, wherein the actively allocating (14) comprises actively allocating the passively allocated radio resources of the two or more network slices in different cells of the tracking area.

2. The method (10) of claim 1, wherein an amount of passively allocated radio resources in the tracking area is higher than an amount of actively allocated radio resources in the tracking area.

3. The method (10) of one of the claims 1 or 2, wherein the actively allocating (14) of radio resources comprises actively allocating passively allocated radio resources of different network slices in different cells of the tracking area independently.

4. The method (10) of one of the claims 1 to 3, further comprising booking radio resources prior to actively allocating passively allocated radio resources.

5. The method (10) of claim 4, wherein the booking comprises receiving a radio resource request for a certain time and in a certain location in advance and reserving the radio resources for the certain time and the certain location.

6. The method (10) of one of the claims 4 or 5, further comprising blocking admission to another network slice in the radio cell if actively allocating the passively allocated radio resources for the network slice would disable actively allocating booked radio resources.

7. The method (10) of one of the claims 4 to 6, further comprising identifying the booking by a Single - Network Slice Selection Assistance Information, S-NSSAI, or a Subscription Permanent Identifier, SUPI.

8. The method (10) of one of the claims 1 to 7, wherein an amount of actively allocated radio resources in the radio cell for the two or more network slices is limited by a predefined limit.

9. The method (10) of claim 8, further comprising controlling the predefined limit using network slice admission control and blocking admission to a further network slice in the radio cell if actively allocating the passively allocated radio resources for the further network slice exceeds the predefined limit.

10. The method (10) of claim 9, further comprising controlling admission to a network slice based on a predefined algorithm.

11. The method (10) of claim 10, wherein the predefined algorithm is a first-come-first-serve algorithm.

12. The method (10) of one of the claims 1 to 11 further comprising controlling a number or UEs accessing a network slice in the radio cell of the tracking area.

13. A computer program having a program code for performing one of the methods (10) of one of the claims 1 to 12, when the computer program is executed on a computer, a processor, or a programmable hardware component.

14. An apparatus (20) for a mobile communication system, comprising
one or more interfaces (22) configured to communicate in the mobile communication system; and
one or more processing devices (24) configured to perform one of the methods of one of the claims 1 to 12.

## Patentansprüche

1. Ein Verfahren (10) zum Zuweisen von Funkressourcen in einem Verfolgungsbereich eines Mobilkommunikationssystems, wobei der Verfolgungsbereich eine Mehrzahl von Funkzellen umfasst und zwei oder mehr Netzwerk-Slices in dem Verfolgungsbereich konfiguriert sind, das Verfahren (10) umfassend:
passives Zuweisen (12) von Funkressourcen für zwei oder mehr Netzwerk-Slices in jeder Zelle des Verfolgungsbereichs, wobei die passiv zugewiesenen Funkressourcen für die Funkkommunikation der entsprechenden Netzwerk-Slices inaktiv sind; und
aktives Zuweisen (14) der passiv zugewiesenen Funkressourcen in einer Zelle des Verfolgungsbereichs für eines der Netzwerk-Slices durch Zulassen eines Benutzerendgeräts, UE, zu dem Netzwerk-Slice, über die Zelle, um aktiv zugewiesene Funkressourcen in der Zelle zu verwenden, wobei zumindest ein Teil der aktiv zugewiesenen Funkressourcen für die Funkkommunikation mit dem UE des Netzwerk-Slices in der Zelle verwendet wird, wobei das aktive Zuweisen (14) ein aktives Zuweisen der passiv zugewiesenen Funkressourcen der zwei oder mehr Netzwerk-Slices in verschiedenen Zellen des Verfolgungsbereichs umfasst.

2. Das Verfahren (10) gemäß Anspruch 1, wobei eine Menge an passiv zugewiesenen Funkressourcen in dem Verfolgungsbereich höher ist als eine Menge an aktiv zugewiesenen Funkressourcen in dem Verfolgungsbereich.

3. Das Verfahren (10) gemäß einem der Ansprüche 1 oder 2, wobei das aktive Zuweisen (14) von Funkressourcen ein aktives Zuweisen von passiv zugewiesenen Funkressourcen von verschiedenen Netzwerk-Slices in verschiedenen Zellen des Verfolgungsbereichs unabhängig voneinander umfasst.

4. Das Verfahren (10) gemäß einem der Ansprüche 1 bis 3, ferner umfassend ein Reservieren von Funkressourcen vor dem aktiven Zuweisen von passiv zugewiesenen Funkressourcen.

5. Das Verfahren (10) gemäß Anspruch 4, wobei das Reservieren ein Empfangen einer Funkressourcenanfrage für eine bestimmte Zeit und an einem bestimmten Ort im Voraus und ein Reservieren der Funkressourcen für die bestimmte Zeit und den bestimmten Ort umfasst.

6. Das Verfahren (10) gemäß einem der Ansprüche 4 oder 5, ferner umfassend ein Blockieren der Zulassung zu einem anderen Netzwerk-Slice in der Funkzelle, wenn das aktive Zuweisen der passiv zugewiesenen Funkressourcen für das Netzwerk-Slice das aktive Zuweisen von reservierten Funkressourcen deaktivieren würde.

7. Das Verfahren (10) gemäß einem der Ansprüche 4 bis 6, ferner umfassend ein Identifizieren der Reservierung durch eine Single-Network-Slice-Selection-Assistance-Information, S-NSSAI, oder einen Subscription Permanent Identifier, SUPI.

8. Das Verfahren (10) gemäß einem der Ansprüche 1 bis 7, wobei eine Menge von aktiv zugewiesenen Funkressourcen in der Funkzelle für die zwei oder mehr Netzwerk-Slices durch eine vordefinierte Grenze begrenzt ist.

9. Das Verfahren (10) gemäß Anspruch 8, ferner umfassend ein Steuern der vordefinierten Grenze unter Verwendung einer Netzwerk-Slice-Zulassungssteuerung und ein Blockieren der Zulassung zu einem weiteren Netzwerk-Slice in der Funkzelle, wenn das aktive Zuweisen der passiv zugewiesenen Funkressourcen für das weitere Netzwerk-Slice die vordefinierte Grenze überschreitet.

10. Das Verfahren (10) gemäß Anspruch 9, ferner umfassend ein Steuern der Zulassung zu einem Netzwerk-Slice basierend auf einem vordefinierten Algorithmus.

11. Das Verfahren (10) gemäß Anspruch 10, wobei der vordefinierte Algorithmus ein First-Come-First-Serve-Algorithmus ist.

12. Das Verfahren (10) gemäß einem der Ansprüche 1 bis 11, ferner umfassend ein Steuern einer Anzahl von UEs, die auf ein Netzwerk-Slice in der Funkzelle des Verfolgungsbereichs zugreifen.

13. Ein Computerprogramm mit einem Programmcode zum Durchführen eines der Verfahren (10) gemäß einem der Ansprüche 1 bis 12, wenn das Computerprogramm auf einem Computer, einem Prozessor oder einer programmierbaren Hardwarekomponente ausgeführt wird.

14. Eine Vorrichtung (20) für ein Mobilkommunikationssystem, umfassend
eine oder mehrere Schnittstellen (22), die ausgebildet sind, um in dem Mobilkommunikationssystem zu kommunizieren; und
eine oder mehrere Verarbeitungsvorrichtungen (24), die ausgebildet sind, um eines der Verfahren gemäß einem der Ansprüche 1 bis 12 durchzuführen.

## Revendications

1. Procédé (10) d'allocation de ressources radio dans une zone de suivi d'un système de communication mobile, la zone de suivi comprenant une pluralité de cellules radio et deux ou plus tranches de réseau sont configurées dans la zone de suivi, le procédé (10) comprenant le fait de :
allouer passivement (12) des ressources radio pour deux ou plus tranches de réseau dans chaque cellule de la zone de suivi, les ressources radio allouées passivement sont inactives pour une communication radio des tranches de réseau correspondantes ; et
allouer activement (14) les ressources radio allouées passivement dans une cellule de la zone de suivi pour l'une des tranches de réseau par admission d'un équipement utilisateur, UE, à la tranche de réseau, par l'intermédiaire de la cellule, pour utiliser des ressources radio allouées activement dans ladite cellule, au moins une partie des ressources radio allouées activement étant utilisée pour une communication radio avec l'UE de la tranche de réseau dans la cellule, dans lequel l'allocation active (14) comprend une allocation active des ressources radio allouées passivement des deux ou plus tranches de réseau dans différentes cellules de la zone de suivi.

2. Procédé (10) selon la revendication 1, dans lequel une quantité de ressources radio allouées passivement dans la zone de suivi est supérieure à une quantité de ressources radio allouées activement dans la zone de suivi.

3. Procédé (10) selon l'une des revendications 1 ou 2, dans lequel l'allocation active (14) de ressources radio comprend une allocation active de ressources radio allouées passivement de différentes tranches de réseau dans différentes cellules de la zone de suivi indépendamment.

4. Procédé (10) selon l'une des revendications 1 à 3, comprenant en outre une réservation de ressources radio avant l'allocation active de ressources radio allouées passivement.

5. Procédé (10) selon la revendication 4, dans lequel la réservation comprend une réception d'une demande de ressources radio pendant un certain temps et à un certain emplacement à l'avance et une réservation des ressources radio pour le certain temps et le certain emplacement.

6. Procédé (10) selon l'une des revendications 4 ou 5, comprenant en outre un blocage d'admission à une autre tranche de réseau dans la cellule radio si une allocation active des ressources radio allouées passivement pour la tranche de réseau désactiverait une allocation active de ressources radio réservées.

7. Procédé (10) selon l'une des revendications 4 à 6, comprenant en outre une identification de la réservation par une information d'assistance de sélection de tranche de réseau unique, S-NSSAI, ou un identifiant permanent d'abonnement, SUPI.

8. Procédé (10) selon l'une des revendications 1 à 7, dans lequel une quantité de ressources radio allouées activement dans la cellule radio pour les deux ou plus tranches de réseau est limitée par une limite prédéfinie.

9. Procédé (10) selon la revendication 8, comprenant en outre un contrôle de la limite prédéfinie en utilisant un contrôle d'admission de tranche de réseau et un blocage d'admission à une autre tranche de réseau dans la cellule radio si une allocation active des ressources radio allouées passivement pour l'autre tranche de réseau dépasse la limite prédéfinie.

10. Procédé (10) selon la revendication 9, comprenant en outre un contrôle d'admission à une tranche de réseau sur la base d'un algorithme prédéfini.

11. Procédé (10) selon la revendication 10, dans lequel l'algorithme prédéfini est un algorithme premier arrivé premier servi.

12. Procédé (10) selon l'une des revendications 1 à 11, comprenant en outre un contrôle d'un nombre d'UE accédant à une tranche de réseau dans la cellule radio de la zone de suivi.

13. Programme informatique ayant un code de programme pour exécuter l'un des procédés (10) selon l'une des revendications 1 à 12, lorsque le programme informatique est exécuté sur un ordinateur, un processeur ou un composant matériel programmable.

14. Appareil (20) pour un système de communication mobile, comprenant
une ou plusieurs interfaces (22) configurées pour communiquer dans le système de communication mobile ; et
un ou plusieurs dispositifs de traitement (24) configurés pour exécuter l'un des procédés selon l'une des revendications 1 à 12.
